# EUROPÄISCHE PATENTANMELDUNG

(11) **EP 3 995 856 A1**
(43) Veröffentlichungstag der Anmeldung: **11.05.2022**
(21) Anmeldenummer: 20205916.8
(22) Anmeldetag: 05.11.2020
(51) Int. Cl.: G01S 17/42, G01S 17/48, G01S 7/48, G06K 7/14, G01S 17/66, G05D 1/02

(54) **VERFAHREN ZUR POSITIONSMESSUNG, POSITIONSMESSSYSTEME UND MARKIERUNG**

(71) Anmelder: Hilti Aktiengesellschaft, 9494 Schaan (LI)
(72) Erfinder: Schmidt, Peer, 88131 Lindau (DE); Morin, Kristian, 9470 Buchs (CH); Helmberger, Michael, 6800 Feldkirch (AT)
(74) Vertreter: Hilti Aktiengesellschaft Corporate Intellectual Property

(57) **Zusammenfassung**

Die Erfindung beschreibt ein Verfahren (100) zur wiederholten Positionsmessung eines Baugeräts (15), beispielsweise einer mobilen Werkzeugmaschine, auf einer Baustelle (10), beispielsweise auf einer Hochbau-Baustelle oder einer Tiefbau-Baustelle, wobei eine Position relativ zu wenigstens zwei, vorzugsweise wenigstens drei, Markierungen (14.1, 14.2, 14.3) gemessen wird, umfassend die Schritte (110, 112, 114, 116): a. Direkte Messung der Distanzen (L1, L2, L3) ausgehend von einem am Baugerät (15) angeordneten und / oder ausgebildeten Positionsmesssystem (16) zu wenigstens zwei der Markierungen (14.1, 14.2, 14.3), vorzugsweise zu allen in einem Sichtfeld des Positionsmesssystems (16) liegenden Markierungen (14.1, 14.2, 14.3), und Messung der Sichtwinkel (Alpha1, Alpha2, Alpha3), unter denen die wenigstens zwei der Markierungen (14.1, 14.2, 14.3) vom Positionsmesssystem (16) aus erscheinen, um eine erste Positionsmessung des Baugeräts (15) durchzuführen, und b. Anpeilen wenigstens zweier der Markierungen (14.1, 14.2, 14.3) vom Positionsmesssystem (16) aus, um eine zweite Positionsmessung des Baugeräts (15) durchzuführen. Des Weiteren werden Positionsmesssysteme (16), ein mobiles Baugerät (15) sowie für dieses Verfahren (100) und die Vorrichtungen eingerichtete Markierung (14.1, 14.2, 14.3) beschrieben. Die Erfindung ermöglicht präzise und hochfrequente Positionsmessungen.

## Beschreibung

Die Erfindung betrifft ein Verfahren zur wiederholten Positionsmessung eines Baugeräts, beispielsweise einer mobilen Werkzeugmaschine, auf einer Baustelle. Bei zahlreichen, auf Baustellen verwendeten oder verwendbaren Geräten, beispielsweise bei Baurobotern, ist es erforderlich, die Position des Baugeräts innerhalb der Baustelle zu messen. Insbesondere sollte das Baugerät in der Lage sein, seine eigene Position auf der Baustelle zu messen.

Übliche Bautätigkeiten erfordern dazu vergleichsweise hohe Messgenauigkeiten, insbesondere sind Messgenauigkeiten im Bereich von 1 cm oder weniger, insbesondere im Bereich von 1 bis 10 mm, wünschenswert.

Soll sich das Baugerät beispielsweise auf der Baustelle fortbewegen, sind die Positionsmessungen zu wiederholen. Hohe Wiederholungsfrequenzen ermöglichen dabei besonders schnelle positionskontrollierte Fortbewegungen.

Der Erfindung liegt daher die Aufgabe zugrunde, ein Verfahren sowie Vorrichtungen anzubieten, die hochfrequente Positionsmessungen eines Baugeräts auf einer Baustelle erlauben.

Gelöst wird die Aufgabe durch ein Verfahren zur wiederholten Positionsmessung eines Baugeräts auf einer Baustelle, wobei die Position relativ zu wenigstens zwei, vorzugsweise wenigstens drei, Markierungen gemessen wird, umfassend die Schritte:
a. Direkte Messung der Distanzen ausgehend von einem am Baugerät angeordneten und / oder ausgebildeten Positionsmesssystem zu wenigstens zwei der Markierungen, vorzugsweise zu allen in einem Sichtfeld des Positionsmesssystems liegenden Markierungen, und Messung der Sichtwinkel, unter denen die wenigstens zwei der Markierungen vom Positionsmesssystem aus erscheinen, um eine erste Positionsmessung des Baugeräts durchzuführen, und
b. Anpeilen wenigstens zweier der Markierungen vom Positionsmesssystem aus, um eine zweite Positionsmessung des Baugeräts durchzuführen.

Das Baugerät kann beispielsweise eine, insbesondere mobile, Werkzeugmaschine, beispielsweise ein, bevorzugt mobiler, Bauroboter oder eine Handwerkzeugmaschine, sein. Das Baugerät kann zur Bearbeitung einer Decke, eines Bodens und / oder einer Wand der Baustelle eingerichtet sein. Es kann wenigstens eine Vorrichtung zum Bohren, Meißeln, allgemein Schlagen und / oder Sprühen aufweisen. Es kann ein Fahrwerk aufweisen. Alternativ oder ergänzend kann es eine Flug- und / oder Schwebevorrichtung zur fliegenden und /oder schwebenden Fortbewegung des Baugeräts aufweisen. Beispielsweise kann das Baugerät auch ein, vorzugsweise unbemanntes, fliegendes Objekt, beispielsweise eine Drohne, sein.

Das Baugerät kann auch selbst ein Positionsmesssystem und / oder ein Positionsmarkierungsgerät, beispielsweise einen Rotations-, einen Strich-, einen Punkt- und / oder einen Linienlaser aufweisend, sein.

Die Baustelle kann eine Hochbau-Baustelle oder eine Tiefbau-Baustelle sein.

Der Erfindung liegt dabei der Gedanke zugrunde, durch einen Wechsel der Messmethoden zur Positionsmessung zu höheren Wiederholfrequenzen gelangen zu können. Insbesondere wird ausgenutzt, dass durch eine direkte Distanzmessung in Verbindung mit Messungen der Sichtwinkel den Markierungen Referenzpositionen besonders präzise zugeordnet werden können. Diese erste Positionsmessung kann einmalig erfolgen. Um eine hohe Messgenauigkeit zu erreichen, können daher auch verhältnismäßig zeitaufwändige Messmethoden, beispielsweise Laufzeit-basierte Messmethoden, zur direkten Distanzmessung verwendet werden.

Anschließend kann durch Anpeilen der Markierungen unter Berücksichtigung der ermittelten Referenzpositionen eine vergleichsweise schnelle Messmethode, insbesondere für nachfolgende, wiederholte Positionsmessungen, verwendet werden. Dadurch lassen sich die nachfolgenden Positionsmessungen erheblich beschleunigen, sodass wiederholte, hochfrequente Positionsmessungen eines Baugeräts auf einer Baustelle möglich sind.

Unter einer direkten Distanzmessung kann eine Messung mittels eines Längenmessers verstanden werden, insbesondere eine Messung ohne Triangulation. Eine direkte Messung kann beispielsweise mechanisch, beispielsweise mittels eines Maßbandes oder dergleichen, oder optisch, beispielsweise mittels eines Lichtstrahls, erfolgen.

Zur Messung kann die zwischen zwei Messpunkten liegende Wegstrecke, beispielsweise mechanisch oder optisch, überbrückt werden. Beispielsweise kann die Laufzeit eines Lichtstrahls entlang der Wegstrecke oder der doppelten Wegstrecke, also sowohl eines Hin- als auch eines Rückweges entlang der Wegstrecke, gemessen werden.

Derartige direkte Messungen bieten den Vorteil, dass mit ihnen die zwischenliegende Wegstrecke unmittelbar, insbesondere ohne Kenntnis von Referenzpositionen oder Referenzstrecken oder dergleichen, ermittelbar ist. Sie sind in der Regel jedoch verhältnismäßig langsam und bieten daher lediglich geringe Wiederholfrequenzen. Je nach konkrete verwendetem Messverfahren kann auch ein vergleichsweise hoher Auswertungs- und / oder Rechenaufwand anfallen, der wiederum die erreichbaren Wiederholfrequenzen limitiert.

Unter Anpeilen kann ein Messverfahren verstanden werden, das lediglich Winkelmessungen unter Bezugnahme auf vorab bekannte Referenzstrecken oder Referenzpositionen benötigt.

Für Positionsmessungen auf Baustellen genügen oftmals zweidimensionale Messungen. Denkbar ist daher, lediglich zwei Markierungen zu messen bzw. zu verwenden. Zur Genauigkeitsverbesserung ist es jedoch auch denkbar, mehr als zwei Markierungen, beispielsweise drei, vier oder fünf Markierungen, zu verwenden. Werden mehr als zwei Markierungen verwendet, kann auch wenigstens eine dreidimensionale Positionsmessung erfolgen. Zur Genauigkeitsverbesserung können die Markierungen voneinander beabstandet, beispielsweise jeweils mindestens 1m voneinander beabstandet, sein.

Das Positionsmesssystem ist am Baugerät angeordnet und / oder ausgebildet; es kann somit mit dem Baugerät mitbewegt werden. Die Position kann vom Baugerät und insbesondere nicht von einem etwaigen Drittgerät, beispielsweise einer separat aufgestellten automatischen Totalstation, aus bestimmt werden. Ein dauerhafter Sichtkontakt zu einem solchen Drittgerät, der insbesondere auf Baustellen oftmals nur schwer aufrecht zu erhalten ist, ist nicht erforderlich.

Die direkte Messung der Distanzen kann zum Beispiel mittels eines Laserdistanzmessers oder einer Time-Of-Flight (TOF-)-Kamera erfolgen. Die direkten Messungen der Distanzen können auch mittels einer Kamera, beispielsweise unter Verwendung eines Simultaneous-Localizationand-Mapping (SLAM)-Algorithmus, erfolgen.

Zur berührungslosen Messung der Distanzen und / oder zur Messung von wenigstens einem der Winkel kann ein elektromagnetischer Strahl, insbesondere ein Laserstrahl, bevorzugt vom Positionsmesssystem aus, ausgestrahlt werden. Der elektromagnetische Strahl kann ein Mikrowellenstrahl, ein Radarstrahl, ein Infrarotstrahl, ein Lichtstrahl aus dem sichtbaren Spektrum, ein UV-Lichtstrahl oder dergleichen sein. Zur Messung kann ein Strahldistanzmesser, beispielsweise ein Laserdistanzmesser, verwendet werden.

Der Laserdistanzmesser kann ein LIDAR, englisch für "light detection and ranging", sein und / oder umfassen. Das LIDAR kann am Positionsmesssystem ausgebildet und / oder angeordnet sein.

Wird bei der Messung der Distanzen und / oder der Sichtwinkel und / oder beim Anpeilen ein Intensitätssensor zur Messung einer Intensität einer Reflexion des Strahls verwendet, lassen sich auf besonders kostengünstige Weise auch Zeitreihen aufzeichnen. Allgemein können Intensitätssensoren vergleichsweise kostengünstig messen und dennoch eine hohe zeitliche Auflösung bei gleichzeitig hoher geometrischer Auflösung aufweisen. Durch Auswertung einer solchen Zeitreihe kann auch wenigstens eine der Markierungen identifiziert werden.

Zur weiteren Steigerung der Messgenauigkeit können eine Inertialmesseinheit (IMU, englisch für "inertial measurement unit"), und / oder einen Winkelencoder verwendet werden. Dies empfiehlt sich insbesondere bei der Messung der Sichtwinkel und / oder beim Anpeilen.

Der Winkelencoder kann beispielsweise eine jeweilige Strahlrichtung des Strahls erfassen. Die Inertialmesseinheit kann eingerichtet sein, Beschleunigungskräfte, beispielsweise die Schwerkraft, des Baugeräts und / oder des Positionsmesssystems zu erfassen. Diese Zusatzinformationen können für eine Vorausrechnung zu erwartender Positionsinformationen und / oder zur Feststellung einer Lage und / oder Ausrichtung des Baugeräts verwendet werden.

Wird der Strahl in einer horizontalen oder zumindest im Wesentlichen horizontalen Ebene, vorzugsweise um 360°, rotiert, so kann mithilfe eines einzigen Strahls das Sichtfeld rund um das Positionsmesssystem bzw. um das Baugerät erfasst werden. Somit lassen sich Möglichkeiten für die Platzierung der Markierungen, insbesondere innerhalb des Sichtfelds des Positionsmesssystems, erweitern. Ebenso lässt sich der Bereich erweitern, innerhalb dessen das Baugerät platziert werden kann, sodass die Position des Baugeräts mit dem Positionsmesssystem bestimmbar ist oder bleibt.

Eine Variante des erfindungsgemäßen Verfahrens kann einen Suchschritt umfassen, in dem die wenigstens zwei Markierungen innerhalb der Baustelle durch das Positionsmesssystem, insbesondere mithilfe des Intensitätssensors, gesucht werden. Die Suche kann dadurch erfolgen, dass der Strahl, insbesondere um 360°, rotiert wird, wobei die Intensitäten von Reflexionen des Strahls gemessen werden. Denkbar ist insbesondere, Markierungen anhand ihrer Reflexionseigenschaften in Bezug auf den Strahl zu detektieren. Zur Suche kann der Strahl in einer horizontalen oder zumindest im Wesentlichen horizontalen Ebene rotiert werden. Denkbar ist, insbesondere wenn während einer Umrundung des Strahls keine Markierung detektiert werden kann, die Höhenlage der Ebene zu variieren. Dazu kann eine vertikale Auslenkung des Strahls, beispielsweise mittels einer Vertikalablenkeinheit, erfolgen. Das Ausmaß der vertikalen Ablenkung kann variiert werden, sodass sich das gesuchte Suchfeld über ein vertikal sich erstreckendes Band ausdehnt.

Denkbar ist, dass die hierzu verwendeten Markierungen charakteristische Reflexionseigenschaften, insbesondere charakteristische Reflexionsmuster, aufweisen.

In den Rahmen der Erfindung fällt des Weiteren ein Positionsmesssystem, eingerichtet zur Ausführung des erfindungsgemäßen Verfahrens, umfassend eine Distanzdirektmesseinheit zur direkten Messung einer Distanz zwischen dem Positionsmesssystem und einer Markierung, einer Sichtwinkelmesseinheit zur Messung eines Sichtwinkels, unter dem die Markierung vom Positionsmesssystem aus erscheint, sowie eine Anpeileinheit zum Anpeilen der Markierung. Ein solches Positionsmesssystem ermöglicht die Nutzung der verfahrensgemäßen Vorteile, insbesondere erlaubt es mehrfache Positionsmessungen des Baugeräts bei verhältnismäßig hoher Wiederholfrequenz. Dabei können ein oder mehrere der Einheiten als einheitliches Element ausgebildet sein und / oder Teil einer anderen der Einheiten sein. Denkbar ist auch, dass wenigstens zwei der Einheiten einzelne ihrer Elemente gemeinsam nutzen. Beispielsweise kann die Distanzmesseinheit ein LIDAR sein und eine Laserstrahlquelle sowie eine Horizontalablenkeinheit umfassen. Die Laserstrahlquelle und / oder die Horizontalablenkeinheit können von der Anpeileinheit mitnutzbar und / oder auch Teil der Anpeileinheit sein.

Denkbar ist auch, dass die Anpeileinheit ein Kamerasystem aufweist. Das Kamerasystem kann zur optischen Bildverarbeitung eingerichtet sein. Insbesondere kann es eingerichtet sein, in einem vom Kamerasystem aufgenommenen Bild die Markierung zu erkennen und / oder einen Winkel, beispielsweise relativ zu einem internen, insbesondere auf das Positionsmesssystem und / oder das Baugerät bezogenen körpereigenen, Koordinatensystem, zu bestimmen, unter dem die Markierung vom Positionsmesssystem aus gesehen erscheint.

Auch fällt in den Rahmen der Erfindung ein Positionsmesssystem zur wiederholten Positionsmessung eines Baugeräts, an dem das Positionsmesssystem anordenbar, ausbildbar, angeordnet und / oder ausgebildet ist, auf einer Baustelle, beispielsweise auf einer Hochbau-Baustelle oder auf einer Tiefbau-Baustelle, wobei die Position relativ zu wenigstens zwei, vorzugsweise wenigstens drei, Markierungen messbar ist, umfassend eine Strahlquelle zur Erzeugung eines elektromagnetischen Strahls, eine Horizontalablenkeinheit zur Ablenkung des Strahls in einer horizontalen oder in einer zumindest im Wesentlichen horizontalen Ebene, einen Strahlendistanzmesser, und einen Intensitätssensor zur Messung einer Intensität einer Reflexion des durch die Strahlquelle erzeugten Strahls. Auch ein solches Positionsmesssystem kann zur Ausführung des erfindungsgemäßen Verfahrens eingerichtet sein.

Die beiden Varianten von Positionsmesssystem können ein oder mehrere der gegenständlichen, im Zusammenhang mit dem Verfahren beschriebenen Merkmale aufweisen. Beispielsweise kann die Strahlquelle ein Laser sein. Insbesondere kann das Positionsmesssystem ein LIDAR aufweisen. Das Positionsmesssystem kann auch eine Vertikalablenkeinheit aufweisen. Das Positionsmesssystem kann auch einen Winkelencoder aufweisen. Die Strahlquelle kann einen Teil des Strahlendistanzmessers bilden.

Bei einer weiteren, besonders bevorzugten Ausführungsform der Erfindung weist das Positionsmesssystem einen Nullpunktdurchlaufsensor auf. Der Nullpunktdurchlaufsensor kann eingerichtet sein, einen Nullpunktdurchgang des Strahls während seiner Rotation zu detektieren. Er kann damit als Sensor zur Erfassung der Umlauffrequenz des Strahls eingerichtet sein.

Die Zeitdauer seit dem jeweils letzten Nullpunktdurchlauf kann ein Nullpunkt eines internen Koordinatensystems oder zumindest einer Achse des internen Koordinatensystems sein.

Besonders bevorzugt weist das Positionsmesssystem ein Kamerasystem auf. Das Kamerasystem kann eingerichtet sein, zeitgleich, im Wesentlichen zeitgleich oder zeitversetzt zu ersten und / oder zweiten Positionsmessungen dritte Positionsmessungen zu messen. Dazu kann beispielsweise ein SLAM-Algorithmus in dem Kamerasystem und / oder in einem mit dem Kamerasystem verbundenen Rechnersystem implementierbar und / oder implementiert sein.

Des Weiteren stellt die Erfindung ein mobiles Baugerät für eine Baustelle, insbesondere für eine Hochbau-Baustelle und / oder eine Tiefbau-Baustelle, beispielsweise ein Bauroboter, eine Handwerkzeugmaschine oder ein Baumessgerät, mit einem erfindungsgemäßen Positionsmesssystem bereit. Das mobile Baugerät kann wenigstens eines der vorangehend beschriebenen Baugeräte aufweisen und / oder sein.

Des Weiteren stellt die Erfindung eine Markierung zur Verwendung in einem erfindungsgemäßen Verfahren und / oder zur Verwendung mit einem erfindungsgemäßen Positionsmesssystem bereit.

Die Markierung umfasst einen Messflächenbereich, der eingerichtet ist, einen elektromagnetischen Strahl des Positionsmesssystems zu reflektieren. Die Reflexion kann matt oder glänzend sein. Der Reflexionsgrad kann im Bereich des Messflächenbereichs höher als der von Oberflächen, insbesondere aller Oberflächen, außerhalb des Messflächenbereichs sein. Insbesondere kann der Messflächenbereich einen grauen, insbesondere hellgrauen, oder einen weißen Farbton aufweisen. Ein solcher Farbton kann einen verhältnismäßig hohen Anteil eingestreuten Lichts diffus reflektieren. Denkbar ist auch, dass der Messflächenbereich eine spiegelnde Oberfläche aufweist.

Besonders bevorzugt kann die Markierung wenigstens einen Markierungsflächenbereich aufweisen. Der Markierungsflächenbereich kann vom Messflächenbereich verschieden sein. Der Markierungsflächenbereich kann ein Streifenmuster aufweisen. Innerhalb des Streifenmusters kann der Reflexionsgrad variieren. Das Streifenmuster kann, zumindest gemäß einer üblichen Verwendungsrichtung der Markierung, vertikal oder zumindest im Wesentlichen vertikal verlaufend ausgebildet sein. Es kann mehrere Markierungsflächenbereiche, insbesondere gemäß der üblichen Verwendungsrichtung der Markierung einen oberen und einen unteren Markierungsflächenbereich, geben.

Die Markierung kann somit ein sandwichartiges Muster aufweisen. Der Messflächenbereich und / oder der Markierungsflächenbereich können ein Streifenmuster mit vertikal variierender Streifendichte und / oder Streifenbreite aufweisen. Hierdurch lässt sich die Identifikation von Markierungen erleichtern. Je nach Ausgestaltung der Markierung, insbesondere des Markierungsflächenbereichs und des Messflächenbereichs, lassen sich auch Informationen zum Bereich oder Punkt, in dem der Strahl auf die Markierung auftrifft, aus der Intensität des reflektierten Lichts des Strahles ableiten.

Eine besonders bevorzugte Ausführungsform der Markierung ist zylinderförmig ausgebildet. Dadurch kann die Markierung aus besonders vielen Richtungen aus erkannt und verwendet werden.

Die Höhe der Markierung kann größer als ihre Breite, insbesondere als ein größter Durchmesser, der Markierung sein. Dabei können die Höhe und die Breite gemäß der üblichen Verwendungsrichtung der Markierung gemessen sein.

Beispielsweise kann die Markierung mindestens 30 cm hoch sein. Besonders bevorzugt kann der Messflächenbereich eine Höhe von mindestens 10 cm aufweisen. Hierdurch lassen sich die Anforderungen an die Stellgenauigkeit der Vertikalablenkeinheit reduzieren und die Höhenlagen, auf denen die Markierungen angeordnet sind, brauchen nicht übereinstimmen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- **Fig.** 1: eine schematische Ansicht auf eine Baustelle von oben mit einem auf einem Baugerät angeordneten Positionsmesssystem;
- **Fig.** 2: eine schematische Darstellung des Positionsmesssystems;
- **Fig.** 3: eine schematische Darstellung einer Markierung sowie abgerollte Darstellungen von Oberflächenbereichen der Markierung und
- **Fig.** 4: ein Flussdiagramm des Verfahrens.

In der nachfolgenden Beschreibung der Figuren werden zur Erleichterung des Verständnisses der Erfindung für gleiche oder sich funktional entsprechende Elemente jeweils die gleichen Bezugszeichen verwendet.

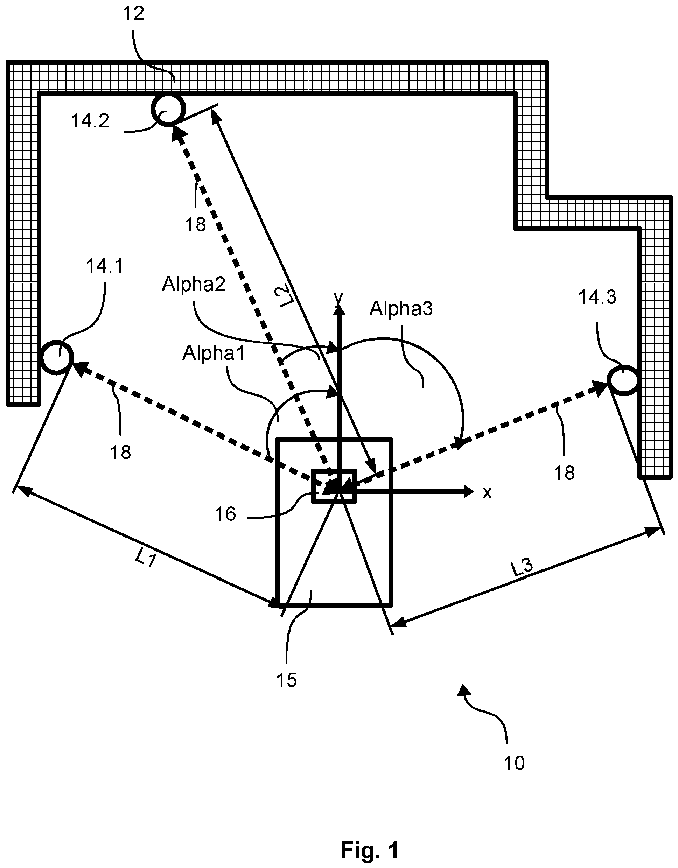

**Fig. 1** zeigt eine Hochbau-Baustelle **10** mit einer Gebäudewand **12.** An der Gebäudewand 12 sind drei Markierungen **14.1, 14.2** und **14.3** angeordnet.

Auf der Hochbaubau-Baustelle 10 befindet sich ein Baugerät **15,** auf dem ein Positionsmesssystem **16** angeordnet ist. Das Baugerät 15 ist ein mobiler Bauroboter. Der mobile Bauroboter kann zur Bearbeitung von Böden, Decken und / oder Wänden, insbesondere zur Bearbeitung der Gebäudewand 12, eingerichtet sein. Insbesondere kann er zum Bohren und / oder Meißeln ausgebildet sein.

Vom Positionsmesssystem 16 wird ein Laserstrahl **18** ausgestrahlt. Das Positionsmesssystem 16 rotiert den Laserstrahl 18 in einer horizontalen Ebene insgesamt um 360° auf Höhe der Markierungen 14.1, 14.2 und 14.3.

In Fig. 1 sind drei Situationen dargestellt, in denen der Laserstrahl 18 jeweils eine der Markierungen 14.1, 14.2 14.3 während seiner Rotation trifft. In diesen Situationen bestimmt das Positionsmesssystem 16 die Distanzen zwischen dem Positionsmesssystem 16 und den Markierungen 14.1, 14.2 und 14.3 als Distanzen **L1, L2** und **L3.** Zudem misst das Positionsmesssystem 16 relativ zu einem internen, körpereigenen Koordinatensystem mit den Achsen **X** und **Y** jeweils Sichtwinkel **Alpha1, Alpha2** und **Alpha3,** unter denen die Markierungen 14.1,14.2 und 14.3 jeweils ausgehend vom Positionsmesssystem 16 sichtbar sind.

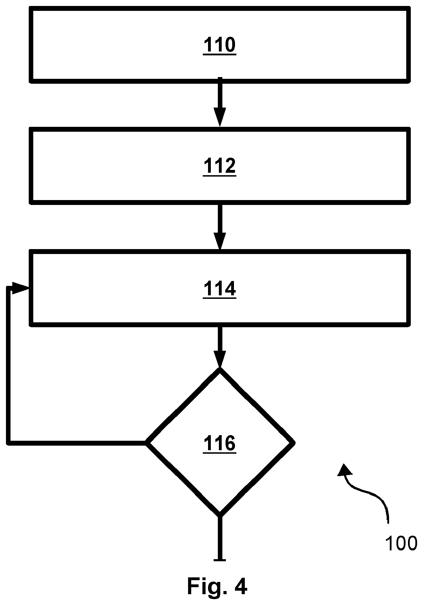

Wie noch im Zusammenhang mit Fig. 4 näher ausgeführt wird, stellt somit Fig. 1 Situationen dar, in der das Positionsmesssystem 16 gemäß dem Schritt a des erfindungsgemäßen Verfahrens Messungen der Distanzen L1, L2 und L3 und der Sichtwinkel Alpha1, Alpha2 und Alpha3 vornimmt.

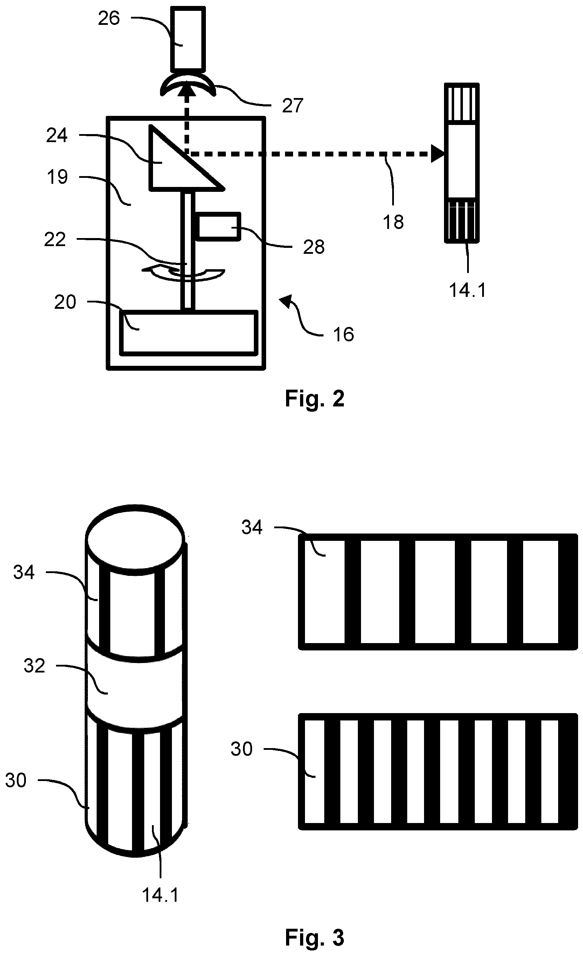

**Fig. 2** zeigt in schematischer Weise den Aufbau des Positionsmesssystems 16.

Es weist eine Horizontalablenkeinheit **19** mit einem Motor **20**, beispielsweise ein Spindelmotor, auf, einer Spindel **22**, einem Prismenspiegel **24** und einem Winkelencoder **28** auf. Der Motor 20 setzt die Spindel 22 in Rotation. Auf der Spindel 22 ist der Prismenspiegel 24 angeordnet. Der Prismenspiegel 24 rotiert somit mit der Spindel 22, angetrieben durch den Motor 20, mit. Er lenkt einen Laserstrahl 18, der von einer Strahlquelle 26 erzeugt und ausgestrahlt wird, in einer horizontalen Ebene ab.

Der Prismenspiegel 24 ist vertikal verstellbar. Insbesondere kann je nach Stellung des Prismenspiegels 24 der Laserstrahl 18 unterschiedliche weit vertikal abgelenkt werden. Er bildet somit eine Vertikalablenkeinheit für den Laserstrahl 18.

Eine Sensoreinheit **27** weist einen Intensitätssensor zur Erfassung von Intensitäten reflektierten Lichts des Laserstrahls 18 sowie einen Strahlendistanzmesser in Form einer Laufzeitmesseinheit zur Erfassung einer Hin- und Rücklaufzeit des Laserstrahls 18 auf. Insbesondere bilden die Strahlquelle 26, der Strahlendistanzmesser und die Horizontalablenkeinheit 19 ein LIDAR.

Der von der Strahlquelle 26 erzeugte Laserstrahl 18 trifft gemäß der in Fig. 1 dargestellten Situationen auf die Markierungen 14.1 bzw. 14.2 (Fig. 1) bzw. 14.3 (Fig. 1) auf und wird von der jeweiligen Markierung 14.1, 14.2 oder 14.3 auf den Prismenspiegel 24 und sodann auf die Sensoreinheit 27 zurückreflektiert. Beispielhaft ist dazu in Fig. 2 die Markierung 14.1 in einer schematischen Seitenansicht abgebildet.

Die Sensoreinheit 27 erfasst die Intensität des zurückreflektierten Lichts als auch die gesamte Laufzeit und damit die gesamte, zurückgelegte Wegstrecke des Laserstrahls 18.

Es versteht sich, dass die Sensoreinheit 27 auch derart ansteuerbar und nutzbar ist, dass lediglich eine der beiden Messgrößen erfasst wird. Insbesondere kann die Sensoreinheit 27 ausgebildet sein, lediglich die Intensität des zurückgestreuten Lichts zu erfassen.

Der Winkelencoder 28 ist eingerichtet, einen Drehwinkel der Spindel 22 und damit des Prismenspiegels 24 und wiederum damit der Strahlrichtung des Laserstrahls 18 zu erfassen. Als Nullpunkt des erfassten Winkels ist dabei die Richtung der Achse Y (Fig. 1) gewählt.

Der Strahlendistanzmesser bildet eine Distanzdirektmesseinheit. Eine Sichtwinkelmesseinheit sowie eine Anpeileinheit sind durch die Strahlquelle 26, die Sensoreinheit 27, die Horizontalablenkeinheit 19 und dem Winkelencoder 28 ausgebildet.

**Fig. 3** zeigt die Markierung 14.1. Die Markierungen 14.2 und 14.3 (beide Fig. 1) sind identisch zur Markierung 14.1 ausgebildet.

Auf der linken Seite der Fig. 3 ist in einer perspektivischen Ansicht zu erkennen, dass die Markierung 14.1 zylinderförmig ausgebildet ist. Sie weist drei Teilbereiche an ihrer Umfangs-Außenseite auf. Insbesondere weist sie einen unteren Markierungsflächenbereich **30** sowie einen oberen Markierungsflächenbereich **34** auf, die einen dazwischen befindlichen Messflächenbereich **32** sandwichartig von oben und unten einschließen.

Wie insbesondere auch anhand der rechten Hälfte der Darstellung gemäß Fig. 3 erkennbar ist, die abgerollte Darstellungen der Teilbereiche zeigt, weisen der obere Markierungsflächenbereich 34 sowie der untere Markierungsflächenbereich 30 jeweils ein Streifenmuster auf. Die Streifenmuster weisen gemäß der üblichen Verwendungsrichtung der Markierung 14.1 vertikal verlaufende Streifen auf. Zu erkennen ist insbesondere, dass die Streifen des Streifenmuster der Markierungsfläche 30 enger gewählt sind als die Streifen des Markierungsflächenbereichs 34.

Überstreicht somit der Laserstrahl 18 (Fig. 1) die Markierung 14.1 im Bereich der oberen Markierungsfläche 34, so weist der zeitliche Intensitätsverlauf des zurückreflektierten Lichts des Laserstrahls 18 einen niederfrequente Rhythmus auf, wohingegen im Falle, dass der Laserstrahl 18 den unteren Markierungsflächenbereich 30 überstreicht, einen höherfrequenten Rhythmus des Intensitätsverlaufs messbar ist. Die beim Überstreichen detektierten Hell-Dunkel-Kontraste sind in ihrer Amplitude sowie in ihren Rhythmen dabei derart gewählt, dass eine Unterscheidung der Markierung 14.1 gegenüber anderer Oberflächen der Baustelle 10 (Fig. 1) mit hinreichender Sicherheit möglich ist.

Überstreicht dagegen der Laserstrahl 18 den Messflächenbereich 32, so wird Licht mit einer verhältnismäßig hohen Intensität, jedoch ohne einer rhythmischen Modulation, zurückreflektiert und kann dadurch detektiert werden. Die Detektion lässt sich noch hinsichtlich ihrer räumlichen Auflösung verbessern, in dem zur Lokalisierung der Markierung 14.1 beispielsweise ein Intensitätsmaximum des reflektierten Lichts ermittelt wird.

Anhand von **Fig. 4** soll nun das erfindungsgemäße Verfahren anhand eines Verfahrens **100** erläutert werden.

Zur Erleichterung des Verständnisses des Verfahrens 100 wird zur Beschreibung von Elementen des Positionsmesssystems sowie anderer der vorangehend beschriebenen Elemente auf die vorangehenden eingeführten Bezugszeichen zurückgegriffen.

In einem Suchschritt **110** werden zunächst gemäß dem oben genannten Suchschritt des Verfahrens die Markierungen 14.1,14.2 und 14.3 innerhalb der Baustelle 10 gesucht bzw. lokalisiert.

Dazu wird der Laserstrahl 18 in Rotation versetzt und mittels des Prismenspiegels 24 vertikal abgelenkt. Die vertikale Ablenkung kann in Stufen, insbesondere in verhältnismäßig groben, der Höhe der Markierungen 14.1,14.2 und 14.3 entsprechenden, Stufen erfolgen.

Trifft dabei der Laserstrahl 18 auf eine der Markierungen 14.1,14.2 und 14.3, so kann seine vertikale Ablenkung feinjustiert werden. Dazu kann anhand der Frequenz des zurückreflektierten Lichts darauf geschlossen werden, in welchem der Teilbereiche der Laserstrahl 18 auftrifft. Je nachdem, ob er beispielsweise auf die obere oder die untere Markierungsfläche 30 bzw. 34 auftrifft, wird der Strahl mittels des Prismenspiegels 24 weiter nach oben oder weiter nach unten abgelenkt, bis er letzten Endes auf die Messflächenbereiche 32 der Markierungen 14.1,14.2 und 14.3 auftrifft.

Für eine erste Positionsmessung werden in einem Schritt a des Verfahrens, in Fig. 4 in einem Schritt **112** abgebildet, mittels der Sensoreinheit 27 die Distanzen L1, L2 und L3 sowie die Sichtwinkel Alpha1, Alpha2 und Alpha3 gemessen. Insbesondere werden die Sichtwinkel Alph1, Alpha2 und Alpha3 relativ zum körpereigenen Koordinatensystem mit den Achsen X und Y gemessen. Dabei ist die Achse Y, die einer üblichen Vorwärtsrichtung des Baugeräts 15 entspricht, als Nulldurchgangsrichtung definiert.

Die Messung der Distanzen L1, L2 und L3 erfolgen durch Laufzeitmessung, d. h. TOF-Messung, der Laufzeit des Laserstrahls 18 von der Sensoreinheit 27 zu den jeweiligen Markierungen 14.1,14.2 bzw. 14.3 und zurück zur Sensoreinheit 27.

Die Winkelmessungen erfolgen mithilfe des Winkelencoders 28, wobei jeweils der Winkel als Sichtwinkel Alpha1, Alpha2 bzw. Alpha3 gewertet wird, den der Laserstrahl 18 im jeweiligen Intensitätsmaximum des zurückreflektierten Lichts annimmt.

Aus den gewonnenen Daten können auch Distanzen und relativen Positionen der Markierungen 14.1, 14.2 und 14.3 zueinander ermittelt werden.

Diese erste Positionsmessung erfolgt in der Regel einmalig innerhalb einer Folge mehrerer Positionsmessungen.

Weitere Positionsmessungen erfolgen anschließend gemäß dem im folgenden beschriebenen Schritt b des Verfahrens 100, der gemäß Fig. 4 von einem Schritt **114** umfasst ist.

Diese zweiten Positionsmessungen können wiederholt durchgeführt werden, insbesondere, wenn das Baugerät 15 auf der Baustelle 10 von einem Ort zu einem anderen Ort fortbewegt wird.

Diese zweiten Positionsmessungen erfolgen mittels Anpeilen der Markierungen 14.1,14.2 und 14.3.

Dazu wird wiederum der Laserstrahl 18, insbesondere um 360°, ausgehend vom Positionsmesssystem 16 rotiert.

Anhand der Intensitätsmaxima des zurückreflektierten Lichts und mithilfe des Winkelencoders 28 werden jeweils die Winkel erfasst, unter denen die Markierungen 14.1,14.42.3 jeweils vom Positionsmesssystem 16 aus erscheinen.

Unter der Annahme, dass die Markierungen 14.1,14.2 und 14.3 auf der Baustelle 10 ortsfest angeordnet sind, lässt sich somit jeweils die Position des Positionsmesssystems 16 und damit des Baugeräts 15 durch Triangulation ermitteln.

Vorzugsweise wird die Rotationsgeschwindigkeit des Laserstrahls 18 bei diesen zweiten Positionsmessungen im Vergleich zu den Positionsbestimmungen gemäß dem Schritt a bzw. 112, beispielsweise auf die doppelte Rotationsgeschwindigkeit, erhöht.

Alternativ zur Rotation des Laserstrahls 18 ist auch denkbar, den Laserstrahl 18 lediglich innerhalb eines Korridors, insbesondere eines Kreissektors, zu lenken. Denkbar ist auch, mehrere Laserstrahlen, insbesondere beispielsweise durch mehr als eine Strahlquelle erzeugt, zu verwenden. Auch ist eine Alternative denkbar, bei der der Laserstrahl 18 auf unterschiedliche Bereiche bzw. Kreissektoren umgeschaltet wird. Die Umschaltung kann beispielsweise ebenfalls mithilfe des Prismenspiegels 24 und / oder einer schaltbaren Flüssigkristallschicht erfolgen.

In einem Abschlussschritt **116** wird sodann überprüft, ob weitere Positionsmessungen vorzunehmen sind. Beispielsweise kann hierzu überprüft werden, ob das Baugerät 15 zur Ruhe gelangt ist oder seine Bewegung weiter fortsetzt. Im Falle weiterer Positionsmessungen wird erneut der Schritt 114 des Verfahrens 100 wiederholt, sodass weitere zweite Positionsmessungen durchgeführt werden.

Anderenfalls wird das Verfahren 100 beendet.

Es versteht sich, dass nach jeweils einer oder mehrerer Positionsmessung das jeweilige Messergebnis an eine weitere Einheit, insbesondere an eine weitere Einheit des Baugeräts 15 zur weiteren Verwendung weitergeleitet werden kann.

### Bezugszeichenliste

- 10: Baustelle
- 12: Gebäudewand
- 14.1: Markierung
- 14.2: Markierung
- 14.3: Markierung
- 15: Baugerät
- 16: Positionsmesssystem
- 18: Laserstrahl
- 19: Horizontalablenkeinheit
- 20: Motor
- 22: Spindel
- 24: Prismenspiegel
- 26: Strahlquelle
- 27: Sensoreinheit
- 28: Winkelencoder
- 30: Markierungsflächenbereich
- 32: Messflächenbereich
- 34: Markierungsflächenbereich
- 100: Verfahren
- 110: Suchschritt
- 112: Schritt
- 114: Schritt
- 116: Abschlussschritt
- Alpha1: Sichtwinkel
- Alpha2: Sichtwinkel Alpha3Sichtwinkel
- L1: Distanz
- L2: Distanz
- L3: Distanz
- X: Achse
- Y: Achse

## Patentansprüche

**1. Verfahren** (100) zur wiederholten Positionsmessung eines Baugeräts (15), beispielsweise einer mobilen Werkzeugmaschine, auf einer Baustelle (10), beispielsweise auf einer Hochbau-Baustelle oder einer Tiefbau-Baustelle, wobei eine Position relativ zu wenigstens zwei, vorzugsweise wenigstens drei, Markierungen (14.1, 14.2, 14.3) gemessen wird, umfassend die Schritte (110, 112, 114, 116):
a. Direkte Messung der Distanzen (L1, L2, L3) ausgehend von einem am Baugerät (15) angeordneten und / oder ausgebildeten Positionsmesssystem (16) zu wenigstens zwei der Markierungen (14.1, 14.2, 14.3), vorzugsweise zu allen in einem Sichtfeld des Positionsmesssystems (16) liegenden Markierungen (14.1, 14.2, 14.3), und Messung der Sichtwinkel (Alpha1, Alpha2, Alpha3), unter denen die wenigstens zwei der Markierungen (14.1, 14.2, 14.3) vom Positionsmesssystem (16) aus erscheinen, um eine erste Positionsmessung des Baugeräts (15) durchzuführen, und
b. Anpeilen wenigstens zweier der Markierungen (14.1, 14.2, 14.3) vom Positionsmesssystem (16) aus, um eine zweite Positionsmessung des Baugeräts (15) durchzuführen.

**2.** Verfahren nach dem vorangehenden Anspruch, **dadurch gekennzeichnet, dass** zur Messung der Distanzen (L1, L2, L3) und / oder zur Messung von wenigstens einem der Winkel ein elektromagnetischer Strahl, insbesondere ein Laserstrahl (18), bevorzugt vom Positionsmesssystem (16) aus, ausgestrahlt wird.

**3.** Verfahren nach einem der vorhergehenden Ansprüche, **dadurch gekennzeichnet, dass** bei der Messung der Distanzen (L1, L2, L3) und / oder der Sichtwinkel (Alpha1, Alpha2, Alpha3) und / oder beim Anpeilen ein Intensitätssensor zur Messung einer Intensität einer Reflexion des Strahls verwendet wird.

**4.** Verfahren nach einem der vorhergehenden Ansprüche, **dadurch gekennzeichnet, dass**, insbesondere bei der Messung der Sichtwinkel (Alpha1, Alpha2, Alpha3) und / oder beim Anpeilen, eine Inertialmesseinheit und / oder ein Winkelencoder (28) verwendet werden.

**6.** Verfahren nach einem der vorangehenden Ansprüche, **dadurch gekennzeichnet, dass** der Strahl in einer horizontalen oder zumindest im Wesentlichen horizontalen Ebene, vorzugsweise um 360°, rotiert wird.

**7.** Verfahren nach einem der vorangehenden Ansprüche, umfassend einen Suchschritt (110), in dem die wenigstens zwei Markierungen (14.1, 14.2, 14.3) innerhalb der Baustelle (10) durch das Positionsmesssystem (16), insbesondere mithilfe des Intensitätssensors, gesucht werden.

**8.** Verfahren nach einem der vorhergehenden Ansprüche, **dadurch gekennzeichnet, dass** die Sichtwinkel (Alpha1, Alpha2, Alpha3) und / oder beim Anpeilen gemessene Winkel relativ zu einem internen, insbesondere körperbezogenen, Koordinatensystem des Baugeräts (15) gemessen werden.

**9.** Verfahren nach einem der vorhergehenden Ansprüche, **dadurch gekennzeichnet, dass** wenigstens eine weitere Positionsmessung durchgeführt wird, wobei ein Kamerasystem verwendet wird.

**10. Positionsmesssystem (16),** eingerichtet zur Ausführung des Verfahrens nach einem der vorhergehenden Ansprüche, umfassend eine Distanzdirektmesseinheit zur direkten Messung einer Distanz zwischen dem Positionsmesssystem (16) und einer Markierung (14.1, 14.2, 14.3), einer Sichtwinkelmesseinheit zur Messung eines Sichtwinkels (Alpha1, Alpha2, Alpha3), unter dem die Markierung (14.1, 14.2, 14.3) vom Positionsmesssystem (16) aus erscheint, sowie eine Anpeileinheit zum Anpeilen der Markierung (14.1, 14.2, 14.3).

**11. Positionsmesssystem (16)** zur wiederholten Positionsmessung eines Baugeräts (15), an dem das Positionsmesssystem (16) anordenbar, ausbildbar, angeordnet und / oder ausgebildet ist, auf einer Baustelle (10), beispielsweise auf einer Hochbau-Baustelle oder auf einer Tiefbau-Baustelle, wobei eine Position relativ zu wenigstens zwei, vorzugsweise wenigstens drei, Markierungen (14.1, 14.2, 14.3) messbar ist, umfassend
- eine Strahlquelle (26) zur Erzeugung eines elektromagnetischen Strahls,
- eine Horizontalablenkeinheit (19) zur Ablenkung des Strahls in einer horizontalen oder in einer zumindest im Wesentlichen horizontalen Ebene,
- einen Strahlendistanzmesser, und
- einen Intensitätssensor zur Messung einer Intensität einer Reflexion des durch die Strahlquelle (26) erzeugten Strahls.

**12.** Positionsmesssystem nach einem der beiden vorhergehenden Ansprüche, **dadurch gekennzeichnet, dass** das Positionsmesssystem (16) ein Kamerasystem aufweist.

**13. Mobiles Baugerät** (15), insbesondere für eine Baustelle (10), insbesondere eine Hochbau-Baustelle und/oder eine Tiefbau-Baustelle, beispielsweise ein Bauroboter, eine Handwerkzeugmaschine oder ein Baumessgerät, mit einem Positionsmesssystem (16) nach einem der Ansprüche 10 bis 12.

**14. Markierung** (14.1, 14.2, 14.3) zur Verwendung im Verfahren (100) nach einem der Ansprüche 1 bis 9 und / oder zur Verwendung mit einem Positionsmesssystem (16) nach einem der Ansprüche 10 bis 12 und / oder zur Verwendung mit einem mobilen Baugerät (15) nach Anspruch 13, umfassend einen Messflächenbereich (32), der eingerichtet ist, einen elektromagnetischen Strahl des Positionsmesssystems (16) zu reflektieren.

**15.** Markierung nach dem vorhergehenden Anspruch, **dadurch gekennzeichnet, dass** die Markierung wenigstens einen Markierungsflächenbereich (30, 32) mit einem Streifenmuster aufweist.

**16.** Markierung nach einem der beiden vorhergehenden Ansprüche, **dadurch gekennzeichnet, dass** die Markierung (14.1, 14.2, 14.3) zylinderförmig ausgebildet ist.
